# EUROPEAN PATENT APPLICATION

(11) **EP 3 705 085 A1**
(43) Date of publication of application: **09.09.2020**
(21) Application number: 19160559.1
(22) Date of filing: 04.03.2019
(51) Int. Cl.: A61C 19/02, A61C 8/00

(54) **PACKAGING FOR DENTAL COMPONENT OR COMPONENTS AND COMBINATION COMPRISING PACKAGING AND DENTAL COMPONENT OR COMPONENTS**

(71) Applicant: Nobel Biocare Services AG, 8302 Kloten (CH)
(72) Inventor: Guttery, Luke, 8052 Zurich (CH); Barradas Fontes, Claudia, 8050 Zurich (CH); Campos Fernández, Manuel, 06291 Montemolín (ES); Zebec, Igor, 5420 Ehrendingen (CH); Kaup, Thomas, 8910 Affoltern am Albis (CH); Carretta, Roberto, 6340 Baar (CH); Pfister, Niki, 8400 Winterthur (CH); Memmolo, Marcello, 4153 Reinach (CH)
(74) Representative: Capré, Didier

(57) **Abstract**

The invention relates to a packaging (2) for dental components. The packaging (2) is configured to receive a dental implant (100) and a surgical component (200). The packaging (2) is configured to receive the dental implant (100) and the surgical component (200) so that the dental implant (100) can be removed from the packaging (2) only after the surgical component (200) has been removed from the packaging (2). The invention further relates to a combination comprising the packaging (2), the dental implant (100) and the surgical component (200), wherein the dental implant (100) and the surgical component (200) are received in the packaging (2). Moreover, the invention relates to a packaging (2) for at least one dental component. The packaging (2) comprises a main body (8) and an attachment member (10) which is detachably attached to the main body (8). The packaging (2) is configured to receive a dental component (200). The attachment member (10) is configured to releasably hold the dental component (200). The packaging (2) is configured to receive the dental component (200) so that a portion (202) of the dental component (200) extends outside the packaging (2). The packaging (2) is configured so that the dental component (200) is released from the attachment member (10) upon detachment of the attachment member (10) from the main body (8). Further, the invention relates to a combination comprising the packaging (2) and the dental component (200), wherein the dental component (200) is received in the packaging (2).

## Description

### Field of the Invention

The present invention relates to a packaging for dental components, the packaging being configured to receive a dental implant and a surgical component, and to a combination comprising the packaging, the dental implant and the surgical component. Further, the invention relates to a packaging for at least one dental component and to a combination comprising the packaging and the at least one dental component.

### Background Art

Dental prostheses, such as dental crowns or dental bridges, are widely used for the treatment of partly or fully edentulous patients. These prostheses are commonly attached to dental implants placed in a patient's jaw bone with the use of a dental fitting, such as an abutment, arranged between implant and prosthesis. For example, for this purpose, single-piece abutments, consisting of a single piece, or multi-piece abutments, comprising two or more separate pieces, may be employed.

When providing a patient with a dental prosthesis, one or more dental implants are placed in the patient's jaw bone first, in particular, by screwing the implant or implants into the jaw bone. For this purpose, an implantation site where a dental implant is to be placed is prepared by using a surgical component, e.g., a hole for the implant is drilled in the jaw bone by means of a surgical drill bit. Proper preparation of the implantation site, in particular, an implant-receiving hole, is important for achieving osseointegration and long-term success of the dental implant. In this regard, it is crucial that the correct surgical component is used when preparing the implantation site for a particular dental implant.

Commonly, dental implants and the associated surgical components for implantation site preparation are packed in separate packagings. Thus, implant and surgical component are provided as separate items so that mix-ups, such as using the wrong surgical component for a given dental implant, can readily occur.

FR 2 742 041 A1 discloses a packaging with multiple compartments for receiving a dental implant and a surgical drill bit. However, the implant and the drill bit can be independently removed from the packaging. Hence, there is still a considerable possibility that the drill bit and/or the implant are mixed up. This applies, in particular, if plural implantation sites for different implants are to be prepared in the jaw bone of a patient.

Further, the preparation of the implantation site and the placement of the dental implant have to meet high clinical standards. Any contamination of the implant and/or the surgical component constitutes a significant risk for the patient's health. For the case of known packagings, unpacking these dental components can cause considerable problems in this respect since this process requires handling of the packagings and/or the components by a dental practitioner. In particular, the sterility of the surgical component may be compromised when it is engaged with a surgical tool, such as a surgical drill.

Hence, there remains a need for a dental component packaging which allows for the reliable and safe use of one or more dental components.

### Summary of the Invention

Accordingly, it is an object of the present invention to provide a dental component packaging which allows for the reliable and safe use of one or more dental components. Further, the invention aims to provide a combination comprising the packaging and the dental component or components.

These goals are achieved by a packaging with the technical features of claim 1, by a packaging with the technical features of claim 11, by a combination with the technical features of claim 16 and by a combination with the technical features of claim 17.

The invention provides a packaging for dental components, wherein the packaging is configured to receive a dental implant and a surgical component. The packaging is configured to receive the dental implant and the surgical component so that the dental implant can be removed from the packaging only after the surgical component has been removed from the packaging.

The packaging is configured such that, when received in the packaging, the dental implant and the surgical component are arranged in the packaging so that the dental implant can be removed from the packaging only after the surgical component has been removed from the packaging.

Therefore, the dental implant and the surgical component cannot be independently removed from the packaging. Rather, the surgical component has to be removed from the packaging first. Only after the surgical component has been removed, it is possible to also remove the dental implant from the packaging. The order of removal of dental implant and surgical component hence follows the order of steps in the implantation protocol and procedure, i.e., implantation site preparation by means of the surgical component first and, subsequently, placement of the dental implant in the thus prepared implantation site. In this way, it is reliably ensured that a user, such as a dental practitioner, uses the correct surgical component when preparing the implantation site for the dental implant. Any mix-ups, such as using the wrong surgical component for the dental implant, are safely avoided, in particular, if plural implantation sites for different implants are to be prepared in the jaw bone of a patient.

Hence, the packaging of the invention enables a reliable and safe use of the dental implant and the surgical component.

Further, since the packaging allows for the dental implant and the surgical component to be received in or by a single common packaging, the processes of packing and unpacking these dental components are rendered significantly more efficient. In particular, only one sterile barrier has to be provided. Also, the amount of packaging waste is considerably reduced.

The packaging may have a top portion, a bottom portion and a longitudinal axis extending in the direction from the bottom portion towards the top portion.

The packaging may be configured so that the dental implant and the surgical component can be or have to be removed from the packaging at and/or through the top portion.

The packaging may be configured such that, when received in the packaging, the dental implant is arranged underneath or below the surgical component in the direction from the bottom portion towards the top portion. In this case, the dental implant is arranged closer to the bottom portion of the packaging than the surgical component, i.e., the surgical component is arranged so as to be further away from the bottom portion. Further, in this case, the surgical component is arranged closer to the top portion of the packaging than the dental implant.

The packaging may be configured so that, when received in the packaging, a longitudinal axis of the dental implant extends substantially along the longitudinal axis of the packaging. The packaging may be configured so that, when received in the packaging, a longitudinal axis of the surgical component extends substantially along the longitudinal axis of the packaging.

The packaging may be configured so that, when received in the packaging, the dental implant and the surgical component are spaced apart from each other in the direction along the longitudinal axis of the packaging.

The surgical component may be an implantation site preparation component. The surgical component may be, for example, a surgical drill component, such as a surgical drill bit.

The dental implant may be made of, for example, a metal, such as titanium, a titanium alloy or stainless steel, a ceramic, a polymer material or a composite material. The surgical component may be made of, for example, a metal, such as titanium, a titanium alloy or stainless steel.

The packaging may be made of, for example, a polymer material, a metal or a composite material. Particularly preferably, the packaging is made of a polymer material.

The packaging may be configured to receive the surgical component so that a portion of the surgical component extends outside or beyond the packaging. In particular, the packaging may be configured to receive the surgical component so that a coupling portion of the surgical component extends outside or beyond the packaging. Herein, the term "coupling portion" defines a portion of the surgical component which allows for the surgical component to be coupled to a surgical instrument or tool, such as a surgical drill or handpiece. The packaging may be configured such that, when received in the packaging, the surgical component is arranged in the packaging so that the portion, in particular, the coupling portion, of the surgical component extends outside or beyond the packaging.

By configuring the packaging such as to receive the surgical component so that the portion, in particular, the coupling portion, of the surgical component extends outside or beyond the packaging, the process of unpacking the surgical component can be further facilitated. The portion of the surgical component extending outside or beyond the packaging can be directly handled by a user, such as a dental practitioner, without having to remove the surgical component from the packaging first. In particular, if the portion is the coupling portion of the surgical component, the coupling portion can be coupled or attached to the surgical instrument or tool or handpiece while the surgical component is still being received by the packaging. In this coupling or attachment process, no manipulation of the surgical component is required. When the surgical component is subsequently removed from the packaging, the surgical component already is in its coupled or attached state so that it does not have to be touched by the user. Hence, the sterility of the surgical component is not compromised in the unpacking process, thus allowing for a particularly reliable and safe use of the surgical component.

The packaging may be configured to receive the surgical component so that the portion, in particular, the coupling portion, of the surgical component extends outside or beyond the packaging at the top portion of the packaging. The packaging may be configured to receive the surgical component so that the portion, in particular, the coupling portion, of the surgical component extends outside or beyond the packaging along a direction which is substantially parallel to the longitudinal axis of the packaging.

The packaging may comprise a main body and an attachment member which is detachably attached to the main body.

The attachment member may be arranged at the top portion of the packaging. The attachment member may be arranged, at least partly, above the main body in the direction from the bottom portion towards the top portion of the packaging, i.e., so that the attachment member is arranged, at least partly, further away from the bottom portion of the packaging than the main body.

The main body may have or define an inner region or space, e.g., for receiving therein the dental implant and/or at least a portion or part of the surgical component. In its attached state, the attachment member may be arranged, at least partly, within or inside the main body, e.g., within or inside the inner region or space of the main body.

The packaging may have an opening. The opening may be arranged at the top portion of the packaging. The opening may be arranged in the main body. The opening may be in communication with the inner region or space of the main body. The packaging may be configured for allowing removal of the dental implant and/or the surgical component from the packaging through the opening.

The packaging may be configured so that, in the state in which the attachment member is attached to the main body, the attachment member, at least substantially, closes the opening.

The packaging may be configured so that the attachment member is detachable from the main body in a direction parallel to the longitudinal axis of the packaging.

The main body and the attachment member may be made from the same material or from different materials. The main body and/or the attachment member may be made of, for example, a polymer material, a metal or a composite material. Particularly preferably, the main body and/or the attachment member are made of a polymer material.

The attachment member may be configured to releasably hold the surgical component. The packaging may be configured so that the attachment member releasably holds the surgical component when the attachment member is attached to the main body.

The attachment member may be configured to releasably hold the surgical component so that a portion, in particular, a coupling portion, of the surgical component extends outside or beyond the attachment member. In this way, the process of unpacking the surgical component can be further facilitated. The portion of the surgical component extending outside or beyond the attachment member can be directly handled by a user, such as a dental practitioner, without having to release the surgical component from the attachment member first. In particular, if the portion is the coupling portion of the surgical component, the coupling portion can be coupled or attached to the surgical instrument or tool while the surgical component is still being held by the attachment member.

The attachment member may be configured to releasably hold the surgical component so that the portion, in particular, the coupling portion, of the surgical component extends outside or beyond the packaging.

The attachment member may be configured to releasably hold the surgical component so that, in the attached state of the attachment member, the attachment member prevents rotational movement of the surgical component relative to the attachment member about the longitudinal axis of the packaging. In this way, the surgical component can be held by the attachment member in an especially well-defined and reliable manner. For example, if the attachment member is further configured to releasably hold the surgical component so that the coupling portion of the surgical component extends outside or beyond the attachment member, the coupling portion can be coupled or attached to the surgical instrument or tool in a particularly reliable and efficient way. In particular, in the coupling or attachment process, a user, such as a dental practitioner, can reliably verify whether the surgical component is properly coupled or attached to the surgical instrument or tool by checking whether or not the instrument or tool can be rotated relative to the surgical component about the longitudinal axis of the packaging. Once such a proper coupling or attachment has been verified, the surgical component can be safely removed from the packaging.

The packaging may be configured so that the surgical component is released from the attachment member upon detachment of the attachment member from the main body. In this way, the process of unpacking the surgical component can be further facilitated. The surgical component can be released from the attachment member and, thus, removed from the packaging, by detaching the attachment member from the main body, without the need of touching the surgical component. Hence, the sterility of the surgical component is further prevented from being compromised in the unpacking process, also contributing to the particularly reliable and safe use of the surgical component.

The packaging may be configured so that the surgical component can be released from the attachment member only upon detachment of the attachment member from the main body.

The attachment member may consist of or comprise two attachment member parts which are separable from each other. The packaging may be configured so that the two attachment member parts are or can be separated from each other upon detachment of the attachment member from the main body, thereby releasing the surgical component from the attachment member. Thus, the surgical component can be released from the attachment member in a particularly simple and reliable manner.

For example, in the state in which the attachment member is attached to the main body, the surgical component may be held between the two attachment member parts. Upon detachment of the attachment member from the main body, the two attachment member parts may be separated from each other so that the surgical component is released.

The packaging may be configured so that, in the state in which the attachment member is attached to the main body, the two attachment member parts are held together, e.g., by the main body and/or by a holding member for holding the dental implant which will be described below. When the attachment member is detached from the main body, the two attachment member parts are no longer held in their positions relative to each other so that they can be separated from each other or are separated from each other, e.g., by the influence of gravity.

The two attachment member parts may be configured so that they are separated from each other by the influence of gravity upon detachment of the attachment member from the main body. In particular, the two attachment member parts may be configured so that they fall off or drop off from the surgical component by the influence of gravity upon detachment of the attachment member from the main body.

Each of the two attachment member parts may be configured so that the center of gravity of the attachment member part is arranged in a position offset or displaced from, i.e., not on, a central longitudinal axis of the assembled attachment member. The expression "assembled attachment member" defines the state in which the two attachment member parts are held together, e.g., when the attachment member is attached to the main body. The central longitudinal axis of the assembled attachment member may extend along the longitudinal axis of the packaging in the state in which the attachment member is attached to the main body. The center of gravity of each attachment member part may be arranged so as to be offset or displaced from the central longitudinal axis of the assembled attachment member in a direction pointing away from the other attachment member part in the assembled state of the attachment member.

Each of the two attachment member parts may be configured so that the center of gravity of the attachment member part is arranged in a position offset or displaced from a position at which the surgical component is held or to be held between the two attachment member parts. The center of gravity of each attachment member part may be arranged so as to be offset or displaced from the position at which the surgical component is held or to be held between the two attachment member parts in a radially outward direction of the packaging. The center of gravity of each attachment member part may be arranged so as to be offset or displaced from the position at which the surgical component is held or to be held between the two attachment member parts in a direction pointing away from the other attachment member part in the assembled state of the attachment member.

By configuring the two attachment member parts in one or more of the ways detailed above, it can be particularly reliably ensured that the attachment member parts are separated from each other by gravity when the attachment member is detached.

Thus, the surgical component can be released from the attachment member in a particularly reliable and safe manner. Separation of the attachment member parts from each other by the influence of gravity, in particular, so that the attachment member parts fall off or drop off from the surgical component, allows for the risk of contamination of the surgical component to be minimised in an especially efficient way. In the process of releasing the surgical component, neither the surgical component nor the attachment member parts have to be touched by the user. Further, the possibility that the surgical component may rub against the attachment member parts during its release, thereby removing particles from the attachment member parts which may contaminate the surgical component, is avoided.
The packaging may be configured to receive the dental implant so that the dental implant can be removed from the packaging only after detachment of the attachment member from the main body. In this way, it can be ensured in a particularly reliable and efficient manner that the dental implant can be removed from the packaging only after the surgical component has been removed from the packaging.

The packaging may further comprise a holding member for holding the dental implant. The holding member may be held in its position relative to the main body by the attachment member and/or the main body. In this way, the dental implant can be received in the packaging in an especially secure manner.

The holding member may be arranged underneath or below the attachment member in the direction from the bottom portion towards the top portion of the packaging.

The holding member may have or define an inner region or space. The holding member may be configured to receive at least part of the dental implant or the entire dental implant within or inside the inner region or space. The holding member may have an implant receiving opening in communication with the inner region or space through which opening the dental implant can be introduced into the holding member and removed therefrom.

The holding member and the attachment member may be configured so that they can be brought into and out of engagement with each other. In the state in which the attachment member is attached to the main body, the attachment member may be engaged with the holding member. The attachment member may be configured to hold the holding member in its position relative to the main body by engagement with the holding member. For example, the holding member may have an attachment member receiving space for receiving a portion of the attachment member. In the attached state of the attachment member, the portion of the attachment member may be received in the attachment member receiving space, thus engaging these two components with each other.

The implant receiving opening and the attachment member receiving space may be arranged at opposite end portions of the holding member.

The packaging may be configured so that the holding member is removable from a remainder of the packaging. In this way, the dental implant can be removed from the packaging in a particularly simple and efficient manner.

The holding member may be held in or attached to the remainder of the packaging by snap fit and/or friction fit.

The packaging may be configured so that, upon attachment of the holding member to the remainder of the packaging, an audible and/or tactile feedback is provided to a user, such as a dental practitioner, giving an indication that the holding member has been properly attached to the remainder of the packaging.

The packaging may be configured so that, upon detachment of the holding member from the remainder of the packaging, an audible and/or tactile feedback is provided to the user, giving an indication that the holding member has been properly detached from the remainder of the packaging.

The holding member may be made of, for example, a metal, such as titanium, a titanium alloy or stainless steel, a polymer material or a composite material. Particularly preferably, the holding member is made of a metal, in particular, titanium or a titanium alloy.

The invention further provides a packaging for at least one dental component. The packaging comprises a main body and an attachment member which is detachably attached to the main body. The packaging is configured to receive a dental component. The attachment member is configured to releasably hold the dental component. The packaging is configured to receive the dental component so that a portion of the dental component extends outside the packaging. The packaging is configured so that the dental component is released from the attachment member upon detachment of the attachment member from the main body.

The packaging, the main body and the attachment member may have the same features, properties and characteristics as the packaging, the main body and the attachment member, respectively, described above.

The dental component may be a surgical component, e.g., a surgical component as described above, a dental implant, e.g., a dental implant as described above, a single-piece or multi-piece abutment, an insert, a connector or the like.

Particularly preferably, the dental component is a surgical component, such as the surgical component described above. The surgical component may be an implantation site preparation component. The surgical component may be, for example, a surgical drill component, such as a surgical drill bit.

The packaging may have a top portion, a bottom portion and a longitudinal axis extending in the direction from the bottom portion towards the top portion.

The packaging may be configured so that the at least one dental component can be or has to be removed from the packaging at and/or through the top portion.

The packaging may be configured so that, when received in the packaging, a longitudinal axis of the at least one dental component extends substantially along the longitudinal axis of the packaging.

The packaging may be made of, for example, a polymer material, a metal or a composite material. Particularly preferably, the packaging is made of a polymer material.

By configuring the packaging such as to receive the dental component so that a portion of the dental component extends outside or beyond the packaging, the process of unpacking the dental component can be considerably facilitated. The portion of the dental component extending outside or beyond the packaging can be directly handled, e.g., gripped by means of an instrument or tool, by a user, such as a dental practitioner, without having to remove the dental component from the packaging first. When subsequently removing the dental component from the packaging, the dental component does not have to be touched by the user. Hence, the packaging enables a reliable and safe use of the dental component.

The dental component may be a surgical component, as has been detailed above. The packaging may be configured to receive the surgical component so that a coupling portion of the surgical component extends outside or beyond the packaging. The packaging may be configured such that, when received in the packaging, the surgical component is arranged in the packaging so that the coupling portion of the surgical component extends outside or beyond the packaging. Thus, the coupling portion can be coupled or attached to a surgical instrument or tool while the surgical component is still being received by the packaging. In this coupling or attachment process, no manipulation of the packaging is required. When the surgical component is subsequently removed from the packaging, the surgical component already is in its coupled or attached state so that it does not have to be touched by the user. Hence, the sterility of the surgical component is not compromised in the unpacking process, thus allowing for a particularly reliable and safe use of the surgical component.

The packaging is configured so that the dental component is released from the attachment member upon detachment of the attachment member from the main body. In this way, the process of unpacking the dental component is further facilitated. The dental component can be released from the attachment member and, thus, removed from the packaging, by detaching the attachment member from the main body, without the need of touching the dental component. Hence, the sterility of the dental component is further prevented from being compromised in the unpacking process, also contributing to the reliable and safe use of the dental component.

The packaging may be configured so that the dental component can be released from the attachment member only upon detachment of the attachment member from the main body.

The packaging may be configured to receive the dental component so that the portion of the dental component extends outside or beyond the packaging at the top portion of the packaging. The packaging may be configured to receive the dental component so that the portion of the dental component extends outside or beyond the packaging along a direction which is substantially parallel to the longitudinal axis of the packaging.

The attachment member may be arranged at the top portion of the packaging. The attachment member may be arranged, at least partly, above the main body in the direction from the bottom portion towards the top portion of the packaging, i.e., so that the attachment member is arranged, at least partly, further away from the bottom portion of the packaging than the main body.

The main body may have or define an inner region or space, e.g., for receiving therein at least a portion or part of the dental component. In its attached state, the attachment member may be arranged, at least partly, within or inside the main body, e.g., within or inside the inner region or space of the main body.

The packaging may have an opening. The opening may be arranged at the top portion of the packaging. The opening may be arranged in the main body. The opening may be in communication with the inner region or space of the main body. The packaging may be configured for allowing removal of the dental component from the packaging through the opening.

The packaging may be configured so that, in the state in which the attachment member is attached to the main body, the attachment member, at least substantially, closes the opening.

The packaging may be configured so that the attachment member is detachable from the main body in a direction parallel to the longitudinal axis of the packaging.

The main body and the attachment member may be made from the same material or from different materials. The main body and/or the attachment member may be made of, for example, a polymer material, a metal or a composite material. Particularly preferably, the main body and/or the attachment member are made of a polymer material.

The attachment member is configured to releasably hold the dental component. The packaging is configured so that the attachment member releasably holds the dental component when the attachment member is attached to the main body.

The attachment member may be configured to releasably hold the dental component so that a portion of the dental component, in particular, a coupling portion thereof, e.g., for the case of a surgical component as the dental component, extends outside or beyond the attachment member. In this way, the process of unpacking the dental component can be further facilitated. The portion of the dental component extending outside or beyond the attachment member can be directly handled by a user, such as a dental practitioner, without having to release the dental component from the attachment member first. In particular, if the portion is the coupling portion of a surgical component, the coupling portion can be coupled or attached to the surgical instrument or tool while the surgical component is still being held by the attachment member.

The attachment member may be configured to releasably hold the dental component so that, in the attached state of the attachment member, the attachment member prevents rotational movement of the dental component relative to the attachment member about the longitudinal axis of the packaging. In this way, the dental component can be held by the attachment member in an especially well-defined and reliable manner.

For example, if the dental component is a surgical component, the coupling portion thereof can be coupled or attached to the surgical instrument or tool in a particularly reliable and efficient way. In particular, in the coupling or attachment process, a user, such as a dental practitioner, can reliably verify whether the surgical component is properly coupled or attached to the surgical instrument or tool by checking whether or not the instrument or tool can be rotated relative to the surgical component about the longitudinal axis of the packaging. Once such a proper coupling or attachment has been verified, the surgical component can be safely removed from the packaging.

The attachment member may consist of or comprise two attachment member parts which are separable from each other. The packaging may be configured so that the two attachment member parts are or can be separated from each other upon detachment of the attachment member from the main body, thereby releasing the dental component from the attachment member. Thus, the dental component can be released from the attachment member in a particularly simple and reliable manner.

For example, in the state in which the attachment member is attached to the main body, the dental component may be held between the two attachment member parts. Upon detachment of the attachment member from the main body, the two attachment member parts may be completely separated from each other so that the dental component is released.

The packaging may be configured so that, in the state in which the attachment member is attached to the main body, the two attachment member parts are held together, e.g., by the main body. When the attachment member is detached from the main body, the two attachment member parts are no longer held in their positions relative to each other so that they can be separated from each other or are separated from each other, e.g., by the influence of gravity.

The two attachment member parts may be configured so that they are separated from each other by the influence of gravity upon detachment of the attachment member from the main body. In particular, the two attachment member parts may be configured so that they fall off or drop off from the dental component by the influence of gravity upon detachment of the attachment member from the main body.

Each of the two attachment member parts may be configured so that the center of gravity of the attachment member part is arranged in a position offset or displaced from, i.e., not on, a central longitudinal axis of the assembled attachment member. The expression "assembled attachment member" defines the state in which the two attachment member parts are held together, e.g., when the attachment member is attached to the main body. The central longitudinal axis of the assembled attachment member may extend along the longitudinal axis of the packaging in the state in which the attachment member is attached to the main body. The center of gravity of each attachment member part may be arranged so as to be offset or displaced from the central longitudinal axis of the assembled attachment member in a direction pointing away from the other attachment member part in the assembled state of the attachment member.

Each of the two attachment member parts may be configured so that the center of gravity of the attachment member part is arranged in a position offset or displaced from a position at which the dental component is held or to be held between the two attachment member parts. The center of gravity of each attachment member part may be arranged so as to be offset or displaced from the position at which the dental component is held or to be held between the two attachment member parts in a radially outward direction of the packaging. The center of gravity of each attachment member part may be arranged so as to be offset or displaced from the position at which the dental component is held or to be held between the two attachment member parts in a direction pointing away from the other attachment member part in the assembled state of the attachment member.

By configuring the two attachment member parts in one or more of the ways detailed above, it can be particularly reliably ensured that the attachment member parts are separated from each other by gravity when the attachment member is detached.

Thus, the dental component can be released from the attachment member in a particularly reliable and safe manner. Separation of the attachment member parts from each other by the influence of gravity, in particular, so that the attachment member parts fall off or drop off from the dental component, allows for the risk of contamination of the dental component to be minimised in an especially efficient way. In the process of releasing the dental component, neither the dental component nor the attachment member parts have to be touched by the user. Further, the possibility that the dental component may rub against the attachment member parts during its release, thereby removing particles from the attachment member parts which may contaminate the dental component, is avoided.

The packaging may be configured for receiving a plurality, such as two or more, three or more or four or more, dental components. For example, the packaging may be configured for receiving a surgical component as a first dental component and a dental implant as a second dental component. The packaging may be configured to receive the surgical component and the dental implant in the manner detailed above.

The following disclosure relates to the packaging for dental components and to the packaging for at least one dental component.

The attachment member may be detachably attached to the main body so that rotational movement of the attachment member relative to the main body about the longitudinal axis of the packaging is prevented. In this way, the dental component, e.g., the surgical component, can be received by the packaging in an especially well-defined and reliable manner.

The attachment member may be detachably attached to the main body by snap fit and/or friction fit.

The packaging may be configured so that, upon attachment of the attachment member to the main body, an audible and/or tactile feedback is provided to a user, such as a dental practitioner, giving an indication that the attachment member has been properly attached to the main body.

The packaging may be configured so that, upon detachment of the attachment member from the main body, an audible and/or tactile feedback is provided to the user, giving an indication that the attachment member has been properly detached from the main body.

The main body may comprise at least one elastically deformable engagement member which is in engagement with an engagement portion of the attachment member, thereby detachably attaching the attachment member to the main body. The packaging may be configured so that elastic deformation of the at least one engagement member allows detachment of the attachment member from the main body. The packaging may be configured so that elastic deformation of the at least one engagement member in a radially inward direction of the packaging allows detachment of the attachment member from the main body.

The packaging may be configured so that engaging the at least one engagement member with the engagement portion and/or disengaging the at least one engagement member from the engagement portion provides an audible and/or tactile feedback to the user, giving an indication that the at least one engagement member has been properly engaged or disengaged, respectively.

The packaging may be configured so that the at least one engagement member can be elastically deformed by a user pressing the engagement member. The packaging, e.g., the main body, in particular, the at least one engagement member, may have a mark, such as a protrusion or a recess, indicating the position at which to press the at least one engagement member.

The main body may comprise a plurality of elastically deformable engagement members, each of which is in engagement with an engagement portion of the attachment member, thereby detachably attaching the attachment member to the main body. For example, the main body may comprise two or more, three or more, four or more or five or more elastically deformable engagement members. In some embodiments, the main body comprises two elastically deformable engagement members. The two elastically deformable engagement members may be arranged at least substantially opposite each other, e.g., in a radial direction of the packaging.

The packaging may be configured so that elastic deformation of the at least one engagement member allows detachment of the attachment member from the main body. The packaging may be configured so that elastic deformation of the at least one engagement member in a radially inward direction of the packaging allows detachment of the attachment member from the main body.

The invention further provides a combination comprising the packaging for dental components of the invention and the dental implant, wherein the dental implant is received in the packaging.

The invention further provides a combination comprising the packaging for dental components of the invention and the surgical component, wherein the surgical component is received in the packaging.

The invention further provides a combination comprising the packaging for dental components of the invention, the dental implant and the surgical component, wherein the dental implant and the surgical component are received in the packaging.

The dental implant and the surgical component are arranged in the packaging so that the dental implant can be removed from the packaging only after the surgical component has been removed from the packaging.

The surgical component may be arranged in the packaging so that a portion, in particular, a coupling portion, of the surgical component extends outside the packaging.

The surgical component may be releasably held by the attachment member.

The surgical component may be releasably held by the attachment member so that a portion, in particular, a coupling portion, of the surgical component extends outside the attachment member.

The surgical component may be releasably held by the attachment member so that, in the attached state of the attachment member, the attachment member prevents rotational movement of the surgical component relative to the attachment member about the longitudinal axis of the packaging.

The packaging may be configured so that the surgical component is released from the attachment member upon detachment of the attachment member from the main body.

The attachment member may comprise two attachment member parts which are separable from each other. The packaging may be configured so that the two attachment member parts are separated from each other upon detachment of the attachment member from the main body, thereby releasing the surgical component from the attachment member.

The packaging may be configured so that the dental implant can be removed from the packaging only after detachment of the attachment member from the main body.

The packaging may further comprise a holding member for holding the dental implant. The dental implant may be held by the holding member. The holding member may be held in its position relative to the main body by the attachment member and/or the main body.

The invention further provides a combination comprising the packaging for at least one dental component of the invention and the dental component, wherein the dental component is received in the packaging.

The dental component is releasably held by the attachment member. The dental component is arranged in the packaging so that a portion of the dental component extends outside the packaging. The packaging is configured so that the dental component is released from the attachment member upon detachment of the attachment member from the main body.

The attachment member may comprise two attachment member parts which are separable from each other. The packaging may be configured so that the two attachment member parts are separated from each other upon detachment of the attachment member from the main body, thereby releasing the dental component from the attachment member.

### Brief Description of the Drawings

Hereinafter, non-limiting examples of the invention are explained with reference to the drawings, in which:
- Fig. 1: is a perspective view of a dental component packaging according to an embodiment of the present invention;
- Fig. 2: is a cross-sectional view of the dental component packaging shown in Fig. 1;
- Fig. 3: is an exploded view of the dental component packaging shown in Fig. 1;
- Fig. 4: is a side view of the dental component packaging shown in Fig. 1;
- Fig. 5: is a side view illustrating a step of disengaging an attachment member of the dental component packaging;
- Fig. 6: is a side view illustrating the initial stage of a step of removing a surgical component from the dental component packaging;
- Fig. 7: is a side view illustrating the final stage of the step of removing the surgical component from the dental component packaging;
- Fig. 8: is a side view illustrating a step of turning the dental component packaging upside down after removal of the surgical component;
- Fig. 9: is a side view showing the outcome of the step illustrated in Fig. 8;
- Fig. 10: is a side view illustrating a step of removing a holding member from the dental component packaging; and
- Fig. 11: is a side view illustrating a step of removing a dental implant from the holding member.

### Detailed Description of Preferred Embodiment

A preferred embodiment of the present invention will now be described with reference to the accompanying drawings. The preferred embodiment constitutes an example of a packaging for dental components of the invention, a packaging for at least one dental component of the invention, a combination of the invention comprising the packaging for dental components, a dental implant and a surgical component, and a combination of the invention comprising the packaging for at least one dental component and the dental component.

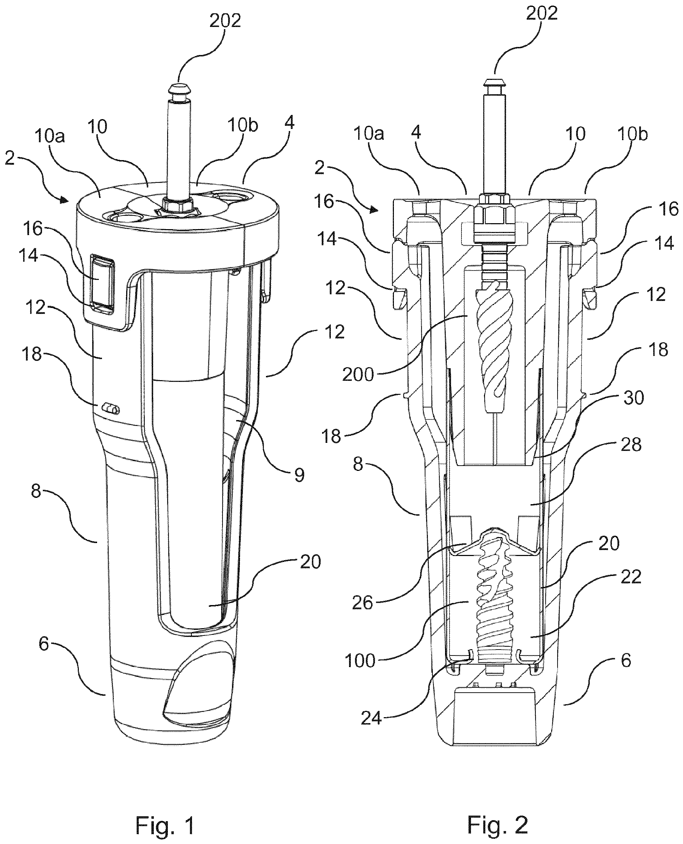

Figure 1 shows a perspective view of a packaging 2 for dental components according to the preferred embodiment of the present invention. Figures 2 to 4 show a cross-sectional view, an exploded view and a side view, respectively, of the packaging 2.

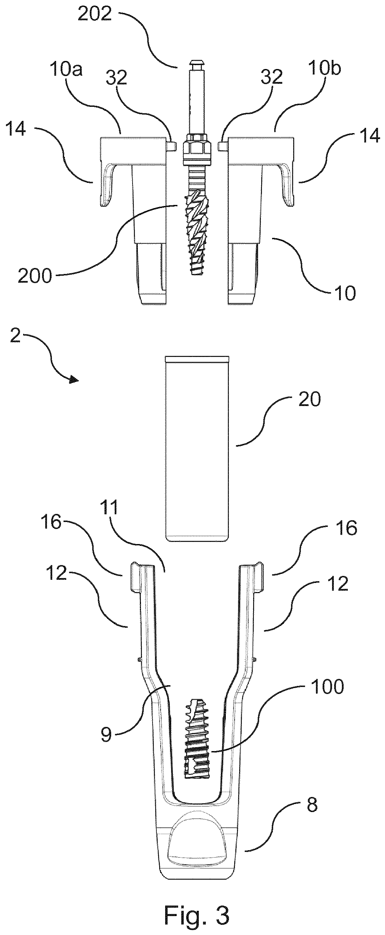

The packaging 2 is configured to receive two dental components, namely a dental implant 100 and a surgical component 200. In the arrangement shown in Figures 1 to 4, the dental implant 100 and the surgical component 200 are received in the packaging 2 (see Figures 2 and 3).

The surgical component 200 is an implantation site preparation component. Specifically, the surgical component 200 is a surgical drill bit for use with a surgical drill. The surgical component 200 is configured for drilling a hole in the jaw bone of a patient in which hole the dental implant 100 is to be placed. In particular, the dental implant 100 is to be screwed into the hole prepared by the surgical component 200. In order to achieve good osseointegration and long-term success of the dental implant 100, the configuration of the surgical component 200 is carefully chosen so as to provide a hole in the jaw bone which has the right shape and dimensions for the dental implant 100. It is thus of crucial importance that the surgical component 200 and the dental implant 100 are used together, i.e., that no mix-ups with respect to the surgical component 200 and/or the dental implant 100 occur. This is ensured by the packaging 2 of the present invention, as will be further detailed below.

The packaging 2 has a top portion 4, a bottom portion 6 and a longitudinal axis extending in the direction from the bottom portion 6 towards the top portion 4 (see Figures 1 and 2).

The dental implant 100 is received in the packaging 2 so that a longitudinal axis of the dental implant 100 extends substantially along the longitudinal axis of the packaging 2 (see Figure 2). The surgical component 200 is received in the packaging 2 so that a longitudinal axis of the surgical component 200 extends substantially along the longitudinal axis of the packaging 2 (see Figure 2). The dental implant 100 and the surgical component 200 are received in the packaging 2 so that they are spaced apart from each other in the direction along the longitudinal axis of the packaging 2.

The packaging 2 comprises a main body 8 and an attachment member 10 which is detachably attached to the main body 8. The attachment member 10 is arranged at the top portion 4 of the packaging 2. A part of the attachment member 10 is arranged above the main body 8 in the direction from the bottom portion 6 towards the top portion 4 of the packaging 2. In the present embodiment, the main body 8 and the attachment member 10 are made of a polymer material.

The main body 8 comprises two elastically deformable engagement members 12, each of which is in the form of a flexible arm extending substantially along the longitudinal axis of the packaging 2. The two engagement members 12 are arranged opposite each other in a radial direction of the packaging 2. In the attached state of the attachment member 10 shown in Figures 1 to 4, each of the engagement members 12 is in engagement with a corresponding engagement portion 14 of the attachment member 10, thereby detachably attaching the attachment member 10 to the main body 8. In the present embodiment, each of the two engagement portions 14 is in the form of a recess provided in the attachment member 10. Each of the two engagement members 12 has a protrusion 16 protruding from a remainder of the engagement member 12 in a radially outward direction of the packaging 2. The engagement members 12 are brought into engagement with the corresponding engagement portions 14 by receiving the protrusions 16 in the engagement portions 14 (see Figures 1 and 2). The protrusions 16 are reliably held in their engaged positions by the restoration force of the engagement members 12 acting in the radially outward direction of the packaging 2.

The attachment member 10 is thus detachably attached to the main body 8 by snap fit. Due to the engagement of the engagement members 12 with the engagement portions 14, the attachment member 10 is detachably attached to the main body 8 so that rotational movement of the attachment member 10 relative to the main body 8 about the longitudinal axis of the packaging 2 is prevented.

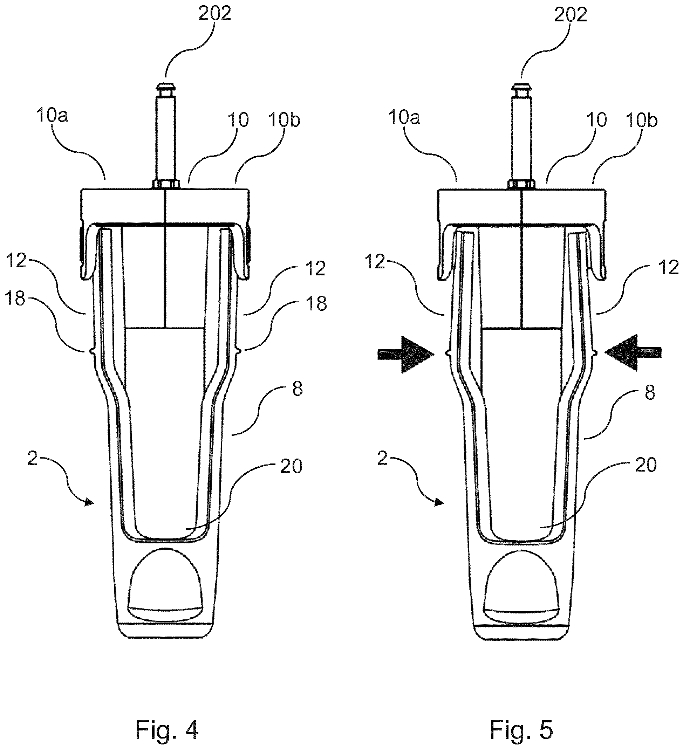

Elastic deformation of the engagement members 12 in a radially inward direction of the packaging 2 allows detachment of the attachment member 10 from the main body 8. By such elastic deformation, the protrusions 16 can be moved out of the engagement portions 14 so that the attachment member 10 can be removed from the main body 8. The engagement members 12 can be elastically deformed by a user pressing the engagement members 12 in the radially inward direction of the packaging 2. Each of the two engagement members 12 has a mark 18 in the form of a protrusion, indicating to the user the position at which to press the engagement member 12. The main body 8 has an outer shape which is configured to guide the hand of the user towards the marks 18. The process of removing the attachment member 10 from the main body 8 will be further detailed below with reference to Figures 5 to 7.

The packaging 2 is configured so that engaging the engagement members 12 with the engagement portions 14 and disengaging the engagement members 12 from the engagement portions 14 provide an audible and tactile feedback to the user, giving an indication that the engagement members 12 have been properly engaged or disengaged, respectively.

The main body 8 has an inner region 9 formed between the two engagement members 12 (see, for example, Figures 1 and 3). In its attached state, the attachment member 10 is partly arranged within the inner region 9. Further, the main body 8 has an opening 11 (e.g., Figure 3) arranged at the top portion 4 of the packaging 2. The opening 11 is in communication with the inner region 9 of the main body 8. In the attached state of the attachment member 10, the attachment member 10 closes the opening 11.

The packaging 2 further comprises a holding member 20 for holding the dental implant 100. In the present embodiment, the holding member 20 is in the form of a sleeve. The holding member 20 may be made of a metal, in particular, titanium or a titanium alloy.

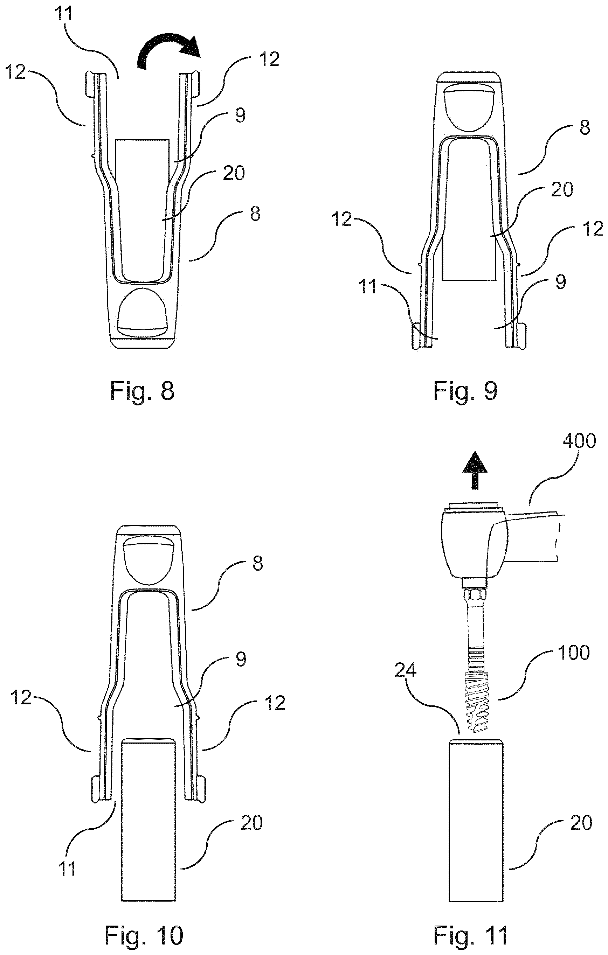

The holding member 20 in the form of a hollow sleeve has an inner space 22 in which the dental implant 100 is received (see Figure 2). Further, the holding member 20 has an implant receiving opening 24 in communication with the inner space 22, and an implant support 26 arranged in the inner space 22. The dental implant 100 is inserted into the inner space 22 through the implant receiving opening 24 and, in its fully inserted state, abuts against the implant support 26. The dental implant 100 can be removed from the holding member 20 through the implant receiving opening 24, as will be further detailed below with reference to Figure 11.

As is shown, for example, in Figures 1 and 2, the holding member 20 is arranged within the inner region 9 of the main body 8 underneath an upper portion of the attachment member 10 in the direction from the bottom portion 6 towards the top portion 4 of the packaging 2. The holding member 20 is held in its position relative to the main body 8 by the attachment member 10 and the main body 8. In particular, the holding member 20 and the attachment member 10 are configured so that they can be brought into and out of engagement with each other. The holding member 20 has an attachment member receiving space 28 for receiving a lower portion 30 of the attachment member 10. In the attached state of the attachment member 10, the lower portion 30 of the attachment member 10 is received in the attachment member receiving space 28, thus engaging the holding member 20 and the attachment member 10 with each other. The holding member 20 is therefore securely held in its position in the packaging 2 between the main body 8 and the attachment member 10 (see Figure 2). In this state, the dental implant 100 is held between the main body 8 and the implant support 26.

The implant receiving opening 24 and the attachment member receiving space 28 are arranged at opposite end portions of the holding member 20 (see Figure 2).

After disengaging the attachment member 10 from the main body 8 and detaching the attachment member 10from the holding member 20 , the holding member 20 can be removed from the main body 8, as will be further detailed below with reference to Figures 8 to 10. In particular, the holding member 20 can be removed from the main body 8 through the opening 11 (see Figure 3). The holding member 20 and, thus, the dental implant 100 can be removed from the packaging 2 only after detachment of the attachment member 10 from the main body 8.

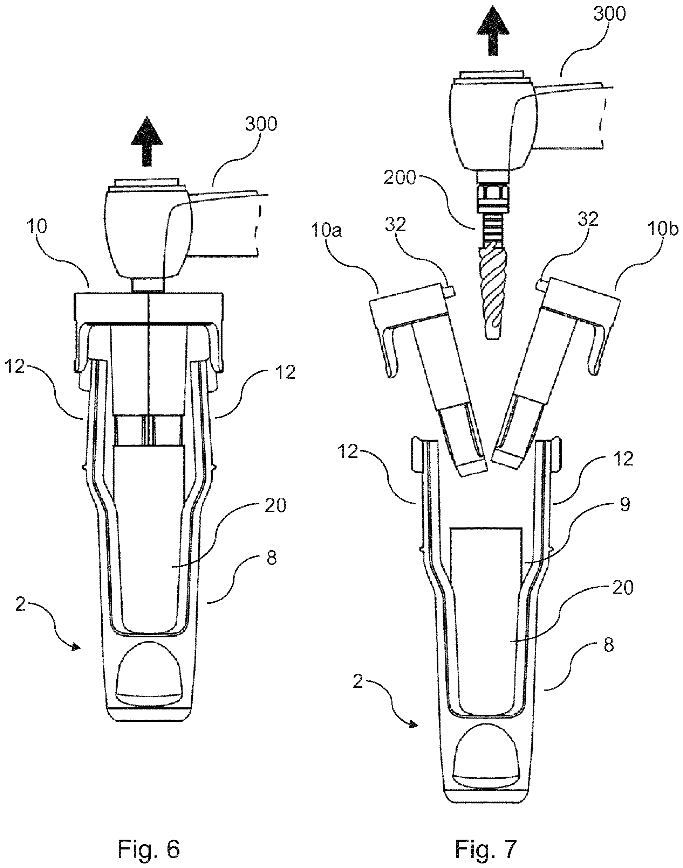

The attachment member 10 consists of two attachment member parts 10a, 10b which are separable from each other (see, for example, Figures 1 to 3 and 7). In the state in which the attachment member 10 is attached to the main body 8, the two attachment member parts 10a, 10b are held together in the radial direction of the packaging 2 by the engagement of the attachment member 10 with the holding member 20. Each of the two attachment member parts 10a, 10b has an engagement protrusion 32 (see Figures 3 and 7) for engagement with a corresponding engagement recess (not shown) provided in each of the two attachment member parts 10a, 10b. In the attached state of the attachment member 10, the engagement protrusions 32 are received within the engagement recesses, thus reliably preventing any relative movement between the two attachment member parts 10a, 10b in the direction along the longitudinal axis of the packaging 2.

In the state in which the attachment member 10 is attached to the main body 8, the surgical component 200 is held between the two attachment member parts 10a, 10b, and within a recess or aperture defined by the attachment member parts 10a, 10b, as is shown in Figures 1 and 2. Specifically, the surgical component 200 is fixedly held by the two attachment member parts 10a, 10b so that rotational movement of the surgical component 200 relative to the attachment member 10 about the longitudinal axis of the packaging 2 and movement of the surgical component 200 relative to the attachment member 10 in the direction along the longitudinal axis of the packaging 2 are prevented. Thus, the surgical component 200 is releasably held by the attachment member 10. The attachment member 10 may be provided with an anti-rotation element, such as a hex recess or the like, for preventing rotational movement of the surgical component 200 relative to the attachment member 10 about the longitudinal axis of the packaging 2.

When the attachment member 10 is detached from the main body 8, thereby disengaging the attachment member 10 from the holding member 20, the two attachment member parts 10a, 10b are no longer held in their positions relative to each other by the holding member 20 so that they are separated from each other, as will be further detailed below with reference to Figure 7. Hence, the surgical component 200 is released from the attachment member 10 upon detachment of the attachment member 10 from the main body 8. The engagement protrusions 32 and the corresponding engagement recesses are configured so as not to significantly impede movement of the two attachment member parts 10a, 10b relative to each other in the radial direction of the packaging 2. Thus, the engagement protrusions 32 and engagement recesses do not affect the separation of the attachment member parts 10a, 10b upon detachment of the attachment member 10 from the main body 8.

The dental implant 100 can be removed from the packaging 2 only after detachment of the attachment member 10 from the main body 8, as has been detailed above. Therefore, the packaging 2 is configured to receive the dental implant 100 and the surgical component 200 so that the dental implant 100 can be removed from the packaging 2 only after the surgical component 200 has been removed from the packaging 2.

The surgical component 200 has a coupling portion 202 for coupling the surgical component 200 to a surgical drill. The surgical component 200 is releasably held by the attachment member 10 so that the coupling portion 202 extends outside the attachment member 10. As is shown, for example, in Figures 1 and 2, the attachment member 10 releasably holds the surgical component 200 so that the coupling portion 202 extends outside the packaging 2. In particular, the coupling portion 202 extends outside the packaging 2 at the top portion 4 of the packaging 2 along a direction which is substantially parallel to the longitudinal axis of the packaging 2.

In the following, the removal of the surgical component 200 and the dental implant 100 from the packaging 2 by the user, such as a dental practitioner, will be described with reference to Figures 5 to 11.

First, the coupling portion 202 of the surgical component 200 extending outside the packaging 2 is coupled to a surgical drill 300 while the surgical component 200 is still being held by the attachment member 10. In this coupling process, no manipulation of the packaging 2 is required. The surgical component 200 is fixedly held by the two attachment member parts 10a, 10b so that rotational movement of the surgical component 200 relative to the attachment member 10 about the longitudinal axis of the packaging 2 is prevented. Further, due to the engagement of the engagement members 12 with the engagement portions 14, the attachment member 10 cannot rotate relative to the main body 8 about the longitudinal axis of the packaging 2. Hence, in the coupling process, the user can reliably verify whether the surgical component 200 is properly coupled to the surgical drill 300 by checking whether or not the surgical drill 300 can be rotated relative to the packaging 2 about the longitudinal axis of the packaging 2. Once such a proper coupling has been verified, the surgical component 200 can be safely removed from the packaging 2. It is to be noted that the surgical drill 300 has been omitted in Figure 5 but is shown in its coupled state in Figures 6 and 7.

After the surgical component 200 has been coupled to the surgical drill 300, the engagement members 12 are pressed by the user in the radially inward direction of the packaging 2 at the positions of the marks 18 (e.g., Figure 4), as is indicated by two arrows in Figure 5. By pressing the engagement members 12 in this manner, they are elastically deformed in the radially inward direction of the packaging 2, thus disengaging the protrusions 16 from the engagement portions 14. Hence, the attachment member 10 becomes movable relative to the main body 8 in the upward direction extending along the longitudinal axis of the packaging 2, thereby allowing detachment of the attachment member 10 from the main body 8. Disengaging the protrusions 16 from the engagement portions 14 provides an audible and tactile feedback to the user, indicating that the protrusions 16 have been properly disengaged.

Subsequently, the surgical drill 300 is moved in the upward direction, as is indicated by an arrow in Figure 6. Since the surgical component 200 is coupled to the surgical drill 300 and the surgical component 200 is fixedly held by the attachment member 10, the upward movement of the surgical drill 300 causes the attachment member 10 to move relative to the main body 8 in the upward direction. In this way, the attachment member 10 is disengaged from the holding member 20 by removing the lower portion 30 of the attachment member 10 from the attachment member receiving space 28 (see Figure 2). The packaging 2 may be configured so that, during detachment of the attachment member 10 from the main body 8, the engagement members 12 press against the holding member 20, so that the holding member 20 is retained in its position relative to the main body 8 in a particularly reliable manner.

Once the lower portion 30 of the attachment member 10 has been fully removed from the attachment member receiving space 28, the two attachment member parts 10a, 10b are no longer held in their positions relative to each other in the radial direction of the packaging 2 by the holding member 20. Upon further upward movement of the surgical drill 300 (see the arrow in Figure 7), the two attachment member parts 10a, 10b thus fall off from the surgical component 200, as is shown in Figure 7. Hence, the surgical component 200 is released from the attachment member 10 and fully removed from the packaging 2. The surgical component 200 does not have to be touched by the user at any stage of the removal process. Therefore, the sterility of the surgical component 200 is not compromised.

Specifically, each of the two attachment member parts 10a, 10b is configured so that the center of gravity of the attachment member part 10a, 10b is arranged in a position offset or displaced from a central longitudinal axis of the assembled attachment member 10. The center of gravity of each attachment member part 10a, 10b is arranged so as to be offset or displaced from the central longitudinal axis of the assembled attachment member 10 in a direction pointing away from the other attachment member part 10a, 10b in the assembled state of the attachment member 10. Thus, it can be particularly reliably ensured that the attachment member parts 10a, 10b are separated from each other by the influence of gravity when the attachment member 10 is detached.

After removing the surgical component 200 from the packaging 2, the surgical component 200 is used to drill a hole in the patient's jaw bone for receiving the dental implant 100.

Subsequently, the dental implant 100 is removed from the packaging 2, as will be detailed in the following.

Figure 8 shows the packaging 2 in the state after complete detachment of the attachment member 10 from the main body 8. As is indicated by a curved arrow in this drawing, the remainder of the packaging 2 is turned upside down so that the opening 11 of the main body 8 is oriented downward. The outcome of this step is shown in Figure 9. After the packaging 2 has been turned upside down in this manner, the main body 8 and the holding member 20 are separated from each other. Specifically, the holding member 20 is removed from the main body 8 through the opening 11, as is shown in Figure 10. Since the remainder of the packaging 2 has been rotated by 180° prior to removing the holding member 20 from the main body 8, the holding member 20 is removed in a state in which the implant receiving opening 24 (see Figure 2) is oriented upward. Hence, it can be reliably avoided that the dental implant 100 may fall out of the holding member 20 during this removal process.

After the holding member 20 has been taken out of the main body 8, the dental implant 100 is attached to an implant driver 400 while still being received in the holding member 20. Subsequently, the dental implant 100 is removed from the holding member 20 through the implant receiving opening 24 by the implant driver 400, as is indicated by an arrow in Figure 11. Thus, also the dental implant 100 does not have to be touched by the user during the removal process thereof.

Although a particular configuration of the packagings and the combinations of the invention has been described above and is shown in the drawings, the technical effects and functionalities of the invention can also be achieved by various other configurations, designs and structures of the packagings and combinations. The shapes, in particular, the outer shapes, and the materials of the main body and the attachment member are not particularly limited. For example, the main body may have a cylindrical outer shape. The number of the engagement members of the main body may be varied and, e.g., be one or more than two, as has been detailed above. Also, different extensions of the one or more engagement members along the circumferential direction of the packaging are possible. The attachment member may have a non-circular outer shape, such as an oval or polygonal outer shape.

## Claims

1. A packaging (2) for dental components, wherein the packaging (2) is configured to receive:
a dental implant (100); and
a surgical component (200), wherein
the packaging (2) is configured to receive the dental implant (100) and the surgical component (200) so that the dental implant (100) can be removed from the packaging (2) only after the surgical component (200) has been removed from the packaging (2).

2. The packaging (2) according to claim 1, wherein the packaging (2) is configured to receive the surgical component (200) so that a portion (202), in particular, a coupling portion, of the surgical component (200) extends outside the packaging (2).

3. The packaging (2) according to claim 1 or 2, wherein the packaging (2) comprises:
a main body (8); and
an attachment member (10) which is detachably attached to the main body (8).

4. The packaging (2) according to claim 3, wherein the attachment member (10) is configured to releasably hold the surgical component (200).

5. The packaging (2) according to claim 4, wherein the attachment member (10) is configured to releasably hold the surgical component (200) so that a portion (202), in particular, a coupling portion, of the surgical component (200) extends outside the attachment member (10).

6. The packaging (2) according to claim 4 or 5, wherein the attachment member (10) is configured to releasably hold the surgical component (200) so that, in the attached state of the attachment member (10), the attachment member (10) prevents rotational movement of the surgical component (200) relative to the attachment member (10) about a longitudinal axis of the packaging (2).

7. The packaging (2) according to any one of claims 4 to 6, wherein the packaging (2) is configured so that the surgical component (200) is released from the attachment member (10) upon detachment of the attachment member (10) from the main body (8).

8. The packaging (2) according to any one of claims 4 to 7, wherein
the attachment member (10) comprises two attachment member parts (10a, 10b) which are separable from each other, and
the packaging (2) is configured so that the two attachment member parts (10a, 10b) are separated from each other upon detachment of the attachment member (10) from the main body (8), thereby releasing the surgical component (200) from the attachment member (10).

9. The packaging (2) according to any one of claims 3 to 8, wherein the packaging (2) is configured to receive the dental implant (100) so that the dental implant (100) can be removed from the packaging (2) only after detachment of the attachment member (10) from the main body (8).

10. The packaging (2) according to any one of claims 3 to 9, wherein
the packaging (2) further comprises a holding member (20) for holding the dental implant (100), and
the holding member (20) is held in its position relative to the main body (8) by the attachment member (10) and/or the main body (8).

11. A packaging (2) for at least one dental component, the packaging (2) comprising:
a main body (8); and
an attachment member (10) which is detachably attached to the main body (8), wherein
the packaging (2) is configured to receive a dental component (200),
the attachment member (10) is configured to releasably hold the dental component (200),
the packaging (2) is configured to receive the dental component (200) so that a portion (202) of the dental component (200) extends outside the packaging (2), and
the packaging (2) is configured so that the dental component (200) is released from the attachment member (10) upon detachment of the attachment member (10) from the main body (8).

12. The packaging (2) according to claim 11, wherein
the attachment member (10) comprises two attachment member parts (10a, 10b) which are separable from each other, and
the packaging (2) is configured so that the two attachment member parts (10a, 10b) are separated from each other upon detachment of the attachment member (10) from the main body (8), thereby releasing the dental component (200) from the attachment member (10).

13. The packaging (2) according to any one of claims 3 to 12, wherein the attachment member (10) is detachably attached to the main body (8) so that rotational movement of the attachment member (10) relative to the main body (8) about a longitudinal axis of the packaging (2) is prevented.

14. The packaging (2) according to any one of claims 3 to 13, wherein the attachment member (10) is detachably attached to the main body (8) by snap fit and/or friction fit.

15. The packaging (2) according to any one of claims 3 to 14, wherein
the main body (8) comprises at least one elastically deformable engagement member (12) which is in engagement with an engagement portion (14) of the attachment member (10), thereby detachably attaching the attachment member (10) to the main body (8), and
the packaging (2) is configured so that elastic deformation of the at least one engagement member (12) allows detachment of the attachment member (10) from the main body (8).

16. A combination comprising the packaging (2) according to any one of claims 1 to 10 or any one of claims 13 to 15 as dependent on any one of claims 3 to 10, the dental implant (100) and the surgical component (200), wherein the dental implant (100) and the surgical component (200) are received in the packaging (2).

17. A combination comprising the packaging (2) according to claim 11 or 12 or any one of claims 13 to 15 as dependent on claim 11 or 12 and the dental component (200), wherein the dental component (200) is received in the packaging (2).
